# EUROPÄISCHE PATENTSCHRIFT

(11) **EP 3 645 371 B1**
(45) Veröffentlichungstag und Bekanntmachung des Hinweises auf die Patenterteilung: **31.03.2021**
(21) Anmeldenummer: 18735543.3
(22) Anmeldetag: 26.06.2018
(51) Int. Cl.: B62D 1/184, F16C 41/00, F16F 9/53, F16D 57/00, F16D 37/02

(54) **VERSTELLBARE LENKSÄULE MIT WENIGSTENS EINEM MRF-STELLER**
ADJUSTABLE STEERING COLUMN HAVING AT LEAST ONE MRF ACTUATOR
COLONNE DE DIRECTION POSITIONNABLE COMPRENANT AU MOINS UN ÉLÉMENT DE RÉGLAGE MRF

(30) Priorität: 29.06.2017 DE 102017114517
(43) Veröffentlichungstag der Anmeldung: 06.05.2020
(73) Patentinhaber: thyssenkrupp Presta AG, 9492 Eschen (LI); thyssenkrupp AG, 45143 Essen (DE)
(72) Erfinder: WESELY, Alexander, Fischers, IN 46037 (US); KREUTZ, Daniel, 6800 Feldkirch (AT); SULSER, Hansjoerg, 9487 Gamprin (LI)
(74) Vertreter: thyssenkrupp Intellectual Property GmbH
(86) Internationale Anmeldenummer: PCT/EP2018/067092
(87) Internationale Veröffentlichungsnummer: WO 2019/002279

(56) Entgegenhaltungen:
- WO-A1-00/37298
- DE-A1-102007 006 015
- DE-A1-102010 020 086
- DE-A1-102010 055 833
- DE-A1-102014 104 362
- DE-A1-102015 007 784
- DE-B3-102004 009 906

## Beschreibung

Die vorliegende Erfindung betrifft eine verstellbare Lenksäule mit den Merkmalen des Oberbegriffs des Anspruchs 1 und einem Verfahren zur Steuerung einer verstellbaren Lenksäule eines Kraftfahrzeuges mit den Merkmalen des Oberbegriffs des Anspruchs 6.

Lenksäulen für Kraftfahrzeuge sind bekannt, welche eine mit dem Chassis des Kraftfahrzeugs verbindbares Halteteil und eine an diesem Halteteil gehaltene Führungsklammer aufweisen, die gegenüber dem Halteteil verstellbar ist. Die Führungsklammer lagert eine Lenkspindel, welche zum Einleiten einer Lenkbewegung von einem Lenkrad in ein Lenksystem dient.

Es ist bekannt, die Führungsklammer gegenüber einem Mantelrohr oder dem Halteteil verstellbar auszulegen, um die Position eines an der Lenkspindel gehaltenen Lenkrades an die jeweilige Sitzposition eines Fahrers des Kraftfahrzeuges anpassen zu können. Weiterhin weisen herkömmliche Lenksäulen zusätzlich Energieabsorptionsvorrichtungen auf, die im Crashfall die Belastung eines Fahrers beim Aufprall auf das Lenkrad bzw. die Lenksäule dämpfen.

Im Stand der Technik offenbart die DE 10 2010 020 086 A1 eine steuerbare Energieabsorptionsvorrichtung für eine verstellbare Lenksäule. Die Energieabsorptionsvorrichtung weist dabei eine Kolben-Zylindereinheit auf, die mit einer magnetorheologischen Flüssigkeit gefüllt ist. Bei einer Relativbewegung der Kolben-Zylindereinheit wird der Kolben gegenüber dem Zylinder verschoben, so dass die magnetorheologische Flüssigkeit durch eine Engstelle in einen Austrittskanal gedrückt wird. Die Viskosität der magnetorheologischen Flüssigkeit kann durch das Magnetfeld deiner Spule verändert werden, wodurch sich auch die Kraft auf die Kolben-Zylindereinheit und somit die Verzögerung der bewegten Massen verändern lässt. Nachteil dieser Lösung ist es, dass zusätzlich eine Verriegelungsvorrichtung vorhanden sein muss, die die Lenksäule zur Verstellung in einer Freigabestellung freigibt und die Lenksäule in einer Fixierstellung blockiert. Diese Verriegelungsvorrichtung benötigt einen großen Bauraum und bringt eine zusätzliche Masse in die Lenksäule ein DE 10 2014 104362 offenbart den Oberbegriff des Anspruchs 1.

Es ist daher Aufgabe der vorliegenden Erfindung, eine verstellbare Lenksäule anzugeben, die leicht und platzsparend ist und eine regelbare Energieabsorptionsvorrichtung aufweist.

Diese Aufgabe wird von einer verstellbaren Lenksäule für ein Kraftfahrzeug mit den Merkmalen des Anspruchs 1 und einem Verfahren zur Steuerung einer Lenksäule eines Kraftfahrzeuges mit den Merkmalen des Anspruchs 6 gelöst. Vorteilhafte Weiterbildungen ergeben sich aus den jeweiligen Unteransprüchen .

Demnach ist eine verstellbare Lenksäule für ein Kraftfahrzeug, umfassend eine von einem Mantelrohr umgebene Lenkspindel, die mit einem Lenkrad verbunden ist, und eine Führungsklammer, in der das Mantelrohr entlang der Längsachse der Lenkspindel verschiebbar geführt ist, vorgesehen, wobei die Führungsklammer um eine Schwenkachse in einem Halteteil, das mit einem Chassis des Kraftfahrzeuges verbindbar ist, schwenkbar gelagert ist, und wobei die Position des Mantelrohrs gegenüber dem Halteteil verstellbar ist, wobei eine Blockiervorrichtung zwischen dem Mantelrohr und dem Halteteil angeordnet ist, wobei die Blockiervorrichtung eine Gewindestange aufweist, die mit einer Spindelmutter in Eingriff steht, und wobei die Spindelmutter in einem Wälzlager gelagert ist, wobei die Wälzkörper des Wälzlagers zumindest teilweise von einer magnetorheologische Flüssigkeit umgeben sind und die Blockiervorrichtung einen Elektromagneten umfasst. Die Viskosität der magnetorheologischen Flüssigkeit lässt sich mittels des Elektromagneten steuern, wodurch wiederum das Durchdrehmoment des Wälzlagers einstellbar ist, so dass die Verstellung der Lenksäule blockiert (Fixierstellung) oder freigegeben (Freigabestellung) werden kann. In der Fixierstellung der Blockiervorrichtung ist die Viskosität der magnetorheologische Flüssigkeit mittels des Elektromagneten gegenüber der Viskosität der magnetorheologische Flüssigkeit in der Freigabestellung so stark erhöht, dass ein Durchdrehen des Wälzlagers und somit der Spindelmutter nur unter hohem Kraftaufwand möglich ist. Die magnetorheologische Flüssigkeit kann ferromagnetische Partikel umfassen, die sich durch den Einfluss eines Magnetfeldes, welches mittels des Elektromagneten bereitgestellt wird, verspannen und somit die Viskosität der magnetorheologische Flüssigkeit anpassbar ist. Somit kann das Mantelrohr gegenüber dem Halteteil fixiert oder für eine Verstellung freigegeben werden. Auf eine zusätzliche Fixiervorrichtung z. B. mittels Spannhebel kann daher verzichtet werden.

Die Blockiervorrichtung ist zwischen dem Mantelrohr und dem Halteteil angeordnet ist. Somit kann die Blockiereinrichtung entweder direkt zwischen dem Mantelrohr und dem Halteteil angeordnet und verbunden sein. Die Blockiereinrichtung kann jedoch auch mit dem Mantelrohr und der Führungsklammer verbunden, wobei die Führungsklammer über die Schwenkachse wiederum mit dem Halteteil verbunden ist, so dass die Blockiereinrichtung zwischen dem Mantelrohr und dem Halteteil angeordnet ist, jedoch mit dem Halteteil unter Zwischenschaltung der Führungsklammer verbunden ist. Ebenfalls kann die Blockiereinrichtung auch mit dem Halteteil und der Führungsklammer verbunden, wobei das Mantelrohr sich in Schwenkrichtung in der Führungsklammer abstützt, so dass die Blockiereinrichtung zwischen dem Mantelrohr und dem Halteteil angeordnet ist, jedoch mit dem Mantelrohr unter Zwischenschaltung der Führungsklammer verbunden ist.

Die Führungsklammer kann alternativ auch als Kastenschwinge oder äußeres Mantelrohr bezeichnet werden.

Vorzugsweise ist die Spindelmutter drehbar und ortsfest bezüglich der Führungsklammer in einem Getriebegehäuse gelagert.

Die Gewindestange ist bevorzugt ohne Selbsthemmung verfahrbar. Somit ist das Gewinde, über das die Gewindestange und die Spindelmutter miteinander in Eingriff stehen, so ausgeführt, dass der Steigungswinkel der Gewindeflanke kleiner als der Arcustangens des Gleitreibungskoeffizienten der zwischen der Gewindestange und der Spindelmutter vorherrscht.

In einer bevorzugten Ausführungsform sind zwei Blockiervorrichtungen vorgesehen, wobei die Lenksäule in ihrer Länge durch eine erste Blockiervorrichtung und in ihrer Höhe durch eine zweite Blockiervorrichtung fixierbar ist. Somit kann es vorgesehen sein, dass die erste Blockiervorrichtung zwischen dem Mantelrohr und der Führungsklammer und die zweite Blockiervorrichtung zwischen der Führungsklammer und dem Halteteil angeordnet ist.

Es ist vorteilhaft, wenn die Verstellung der Lenksäule in ihrer Länge zu einer Verschiebung des Mantelrohrs gegenüber der Führungsklammer führt.

Vorzugsweise sind die Wälzkörper aus einem magnetisierbaren Werkstoff beschaffen und der Elektromagnet dazu eingerichtet, die Wälzkörper zu magnetisieren oder zu entmagnetisieren. Durch diese vorteilhafte Weiterbildung ist die Möglichkeit gegeben, zwischen der Fixierstellung und der Freigabestellung umzuschalten, ohne dass der Elektromagnet in einer der Stellungen dauerhaft bestromt werden muss.

Weiterhin ist ein Verfahren zur Steuerung einer verstellbaren Lenksäule eines Kraftfahrzeuges umfassend eine von einem Mantelrohr umgebene Lenkspindel, die mit einem Lenkrad verbunden ist, und eine Führungsklammer, in der das Mantelrohr entlang der Längsachse der Lenkspindel verschiebbar geführt ist, vorgesehen, wobei die Führungsklammer um eine Schwenkachse in einem Halteteil, das mit einem Chassis des Kraftfahrzeuges verbindbar ist, schwenkbar gelagert ist, und wobei die Position des Mantelrohrs gegenüber dem Halteteil verstellbar ist, wobei eine Blockiervorrichtung (22, 122) zwischen dem Mantelrohr (4) und dem Halteteil (6) angeordnet ist, wobei die Blockiervorrichtung (22, 122) eine Gewindestange aufweist, die mit einer Spindelmutter in Eingriff steht und die Blockiervorrichtung zwischen einer Fixierstellung und Freigabestellung umgeschaltet werden kann, wobei in der Fixierstellung die Verstellung der Lenksäule blockiert ist und in der Freigabestellung die Verstellung der Lenksäule freigegeben ist. Das Verfahren umfasst folgende Schritte:
- Bereitstellen eines Wälzlagers, das die Spindelmutter lagert, wobei die Wälzkörper des Wälzlagers zumindest teilweise von einer magnetorheologische Flüssigkeit umgeben sind,
- Beim Übergang der Blockiervorrichtung in die Fixierstellung, Magnetisieren der Wälzkörper mittels eines Elektromagnets um die Viskosität der magnetorheologische Flüssigkeit zu erhöhen, derart, dass die Rotation der Spindelmutter gesperrt ist,
- Beim Übergang der Blockiervorrichtung in die Freigabestellung, Entmagnetisieren der Wälzkörper mittels des Elektromagnets um die Viskosität der magnetorheologische Flüssigkeit zu verringern, derart, dass die Rotation der Spindelmutter freigegeben ist.

Dabei ist vorteilhaft, wenn die Spindelmutter drehbar und ortsfest bezüglich der Führungsklammer in einem Getriebegehäuse gelagert ist, so dass eine Axialbewegung der Gewindestange relativ zur Spindelmutter zu einer Drehung der Spindelmutter führt.

Bevorzugt ist die Gewindestange ohne Selbsthemmung verfahrbar. Dadurch kann eine leichtgängige manuelle Verstellung des Mantelrohrs gegenüber dem Halteteil in der Freigabestellung der Blockiervorrichtung gewährleistet werden.

In einer bevorzugten Ausführungsform sind zwei Blockiervorrichtungen vorgesehen, wobei die Lenksäule in ihrer Länge durch eine erste Blockiervorrichtung und in ihrer Höhe durch eine zweite Blockiervorrichtung fixierbar ist. Sowohl die Höhenverstellrichtung als auch die Längsverstellrichtung weisen somit jeweils eine Blockiervorrichtung mit einer magnetorheologischen Flüssigkeit auf.

Es ist vorteilhaft, wenn im Crashfall der Elektromagnet so bestromt wird, dass die Spindelmutter mit einem vordefinierten Bremsmoment verdrehbar ist. Dadurch kann erreicht werden, dass sich das Mantelrohr im Crashfall gegenüber dem Halteteil verlagert, wobei durch das Bremsmoment die Gewindestange und somit das Mantelrohr nur unter erhöhtem Kraftaufwand verschiebbar ist, so dass eine Energieabsorption erfolgt. Durch die Anpassung der Bestromung des Elektromagneten, kann das Crashniveau angepasst werden, so dass eine an den Unfall und an den Fahrer angepasste Energieabsorption erfolgt.

Bevorzugt kann es zusätzlich vorgesehen sein, einen motorischen Verstellantrieb für die Verstellung in Höhenverstellrichtung als auch die Längsverstellrichtung vorgesehen sein. Der motorische Verstellantrieb ermöglicht es, das Mantelrohr gegenüber dem Halteteil beispielsweise mittels eines Elektromotors zu verstellen, wenn sich die Blockiervorrichtungen in der Freigabestellung befinden. Die Verstellung mittels eines motorischen Verstellantriebs ist dem Fachmann beispielsweise aus der DE102014104362A1 vorbekannt.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine erste räumliche Darstellung einer Lenksäule mit einer Blockiervorrichtung für die Längsverstellrichtung und einer Blockiervorrichtung für die Höhenverstellrichtung,
- Fig. 2:: eine zweite räumliche Darstellung einer Lenksäule gemäß Figur 1 mit einer Blockiervorrichtung für die Längsverstellrichtung und einer Blockiervorrichtung für die Höhenverstellrichtung,
- Fig. 3:: ein detaillierter Längsschnitt durch eine Blockiervorrichtung der Lenksäule,
- Fig. 4:: eine räumliche Darstellung der Lenksäule der Figur 1 ohne Abdeckung der Blockiervorrichtung,
- Fig. 5:: einen Querschnitt durch die Lenksäule gemäß den Figuren 1 und 2, sowie
- Fig. 6:: eine Detaildarstellung eines Wälzlagers einer Blockiervorrichtung im Querschnitt;
- Fig. 7: eine räumliche Darstellung einer Lenksäule in einer zweiten Ausführungsform mit einer Blockiervorrichtung für die Längsverstellrichtung und einer Blockiervorrichtung für die Höhenverstellrichtung und motorischen Verstellantrieben.

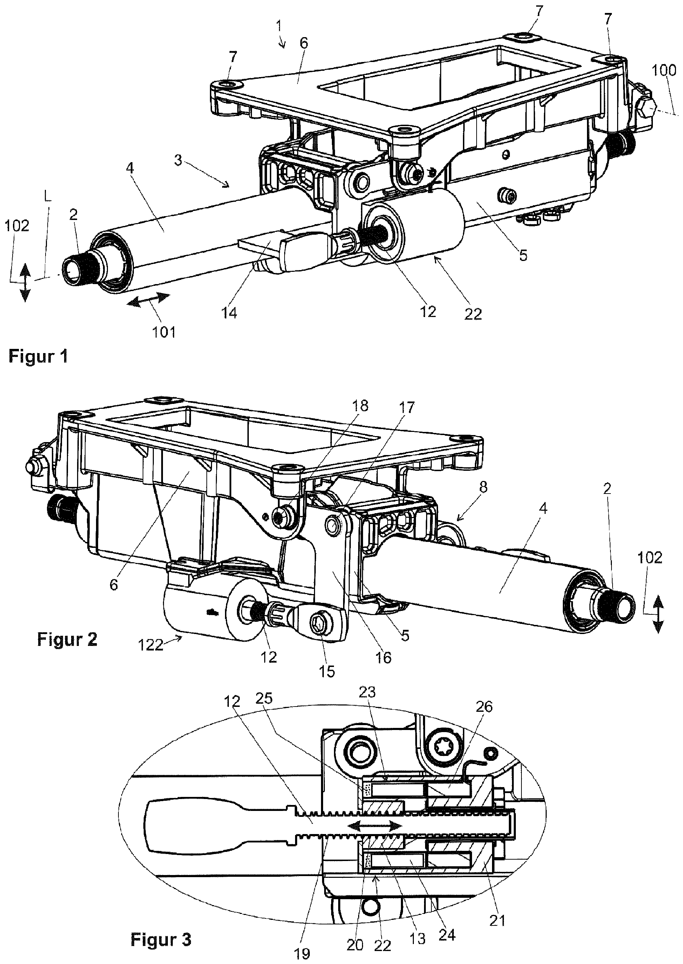

Figur 1 und Figur 2 veranschaulichen eine Lenksäule 1 eines Kraftfahrzeuges, die eine Lenkspindel 2 umfasst, die um ihre Drehachse drehbar in einer Lenkspindellagereinheit 3, aufweisend ein Mantelrohr 4, gelagert ist. Das Mantelrohr 4 ist in einer Führungsklammer 5, welche auch als äußeres Mantelrohr oder Kastenschwinge bezeichnet werden kann, entlang der Längsachse L der Lenkspindel 2 verschiebbar geführt. Die Führungsklammer 5 ist um eine Schwenkachse 100 in einem Halteteil 6 schwenkbar gelagert. Das Halteteil 6 kann in Befestigungspunkten 7 an der nicht dargestellten Karosserie befestigt werden. Die von einem Fahrer über ein (nicht dargestelltes) Lenkrad in die Lenkspindel 2 eingebrachte Drehbewegung wird in das nicht dargestellte Lenkgetriebe eingebracht. Zur Erhöhung des Komforts des Fahrers kann die Lenksäule 1 in ihrer Höhe in die Höhenverstellrichtung 101 und in ihrer Länge in die Längsverstellrichtung 102 verstellt werden. Zur Realisierung der Verstellung in Höhenverstellrichtung 101 ist das Mantelrohr 4 zusammen mit der Führungsklammer 5 um die Schwenkachse 100 verschwenkbar.

Es ist eine erste Blockiervorrichtung 22 für eine Fixierung des Mantelrohrs 4 gegenüber der Führungsklammer 5 in Längsverstellrichtung 101 und somit eine Fixierung des Mantelrohrs 4 gegenüber dem Halteteil 6 vorgesehen, wobei die erste Blockiereinrichtung 22 eine Gewindestange 12 sowie eine Spindelmutter 13, aufweist.

Die Gewindestange 12 ist über einen Anlenkhebel 14 mit dem Mantelrohr 4 verbunden ist, sodass eine Verschiebung des Mantelrohrs 4 gegenüber der Führungsklammer 5 zu einer Verschiebung des Anlenkhebels 14 gegenüber der Führungsklammer 5 führt.

Die Gewindestange 12 ist an dem Anlenkhebel 14 gehalten und erstreckt sich in Längsverstellrichtung 102 und somit in Richtung der Längsachse L.

Es ist eine zweite Blockiervorrichtung 122 für eine Fixierung des Mantelrohrs 4 und der Führungsklammer 5 in Höhenverstellrichtung 102 gegenüber dem Halteteil 6 vorgesehen, wobei die zweite Blockiereinrichtung 122 eine Gewindestange 12 sowie eine Spindelmutter 13, aufweist.

Durch die Verschiebung der Gewindestange 12 in Axialrichtung wird die Spindelmutter 13 in Rotation versetzt. Die Gewindestange 12 der zweiten Blockiervorrichtung 122 ist über ein Gelenk 15 mit einem Stellhebel 16 verbunden. Der Stellhebel 16 ist verschwenkbar in einer Gelenkachse 18 am Halteteil 6 und in einer Gelenkachse 17 an der Führungsklammer 5 gehalten. Dadurch wird erreicht, dass über die Spindelmutter 113 und die Gewindestange 112 eine Verschwenkung der Führungsklammer 5 gegenüber dem Halteteil 6 erfolgt, wenn das Mantelrohr 4 um die Schwenkachse 100 gegenüber dem Halteteil 6 verschwenkt wird.

Figur 3 zeigt den Aufbau der ersten Blockiervorrichtung 22 im Detail. Der Aufbau der zweiten Blockiervorrichtung 122 entspricht dem Aufbau der ersten Blockiervorrichtung 22. Die Gewindestange 12, greift mit einem Außengewinde 19 in ein Innengewinde 20 eine Spindelmutter 13,113 ein. Das Gewinde ist so ausgestaltet, dass keine Selbsthemmung vorliegt. Die Spindelmutter 13, ist drehbar, aber ortsfest in einem Getriebegehäuse 21 gelagert, so dass eine Axialbewegung der Gewindestange 12, zu einer Rotation der Spindelmutter 13 relativ zur Gewindestange 12 führt.

Die Blockiervorrichtung 22,122 ist zwischen einer Fixierstellung und einer Freigabestellung umschaltbar. In der Freigabestellung kann die Längs- und/oder Höhenverstellung der Lenksäule erfolgen. In der Fixierstellung verhindert die Blockiervorrichtung 22,122 eine Verstellung der Gewindestange 12.

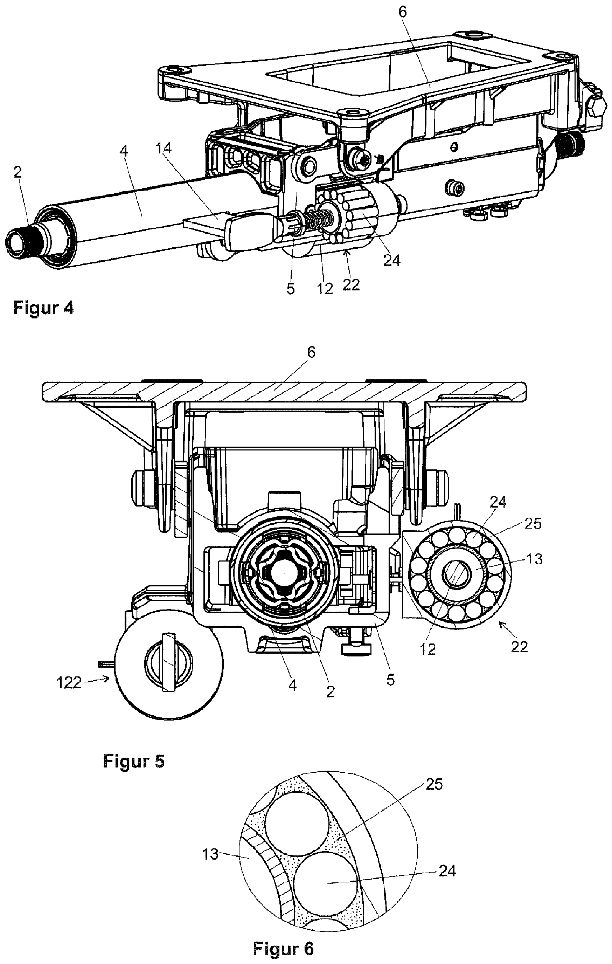

Wie in den Figuren 3 bis 6 gezeigt, weist die Blockiervorrichtung 22,122 ein Wälzlager 23 auf, dass die Spindelmutter 13, lagert, wobei die Wälzkörper 24 zumindest teilweise von einer magnetorheologischen Flüssigkeit 25 umgeben sind. Weiterhin ist ein Elektromagnet 26 (elektrische Spule) an einer Stirnseite des Wälzlagers 23 auf Höhe der Wälzkörper 24 vorgesehen. Über kurzzeitige und entsprechend starke magnetische Impulse der elektrischen Spule 26 werden die als Dauermagnet ausgebildeten Wälzkörper 24 magnetisiert oder entmagnetisiert. Das vorhandene Magnetfeld der magnetisierten Wälzkörper 24 führt zu einer Verkettung der magnetorheologischen Partikel der magnetorheologischen Flüssigkeit 25 die sich zwischen den Wälzkörpern 24 befinden. Durch die Verkettung der magnetorheologischen Partikel erhöht sich die Viskosität, was dazu führt, dass die Verstelleinrichtung fixiert ist, da die Rotation der Spindelmutter 13, gesperrt ist. Somit ist die Blockiervorrichtung 22,122 zwischen einer Fixierstellung und einer Freigabestellung umschaltbar. In der Freigabestellung kann die Längs- und/oder Höhenverstellung der Lenksäule erfolgen. In der Fixierstellung verhindert die Blockiervorrichtung 22,122 eine Verstellung der Gewindestange 12, da durch die Verkettung der magnetorheologischen Partikel die Viskosität erhöht ist, was dazu führt, dass die Blockiervorrichtung fixiert ist, da die Rotation der Spindelmutter 13, gesperrt ist. Erfolgt durch den Elektromagneten 26 eine Entmagnetisierung der als Dauermagnet ausgebildeten Wälzkörper 24, so ist die Blockiervorrichtung in die Freigabestellung überführt und das Mantelrohr 4 kann gegenüber dem Halteteil verstellt werden.

Als magnetorheologische Flüssigkeit bezeichnet man eine Suspension von kleinen magnetisch polarisierbaren Partikeln, welche in einer Trägerflüssigkeit fein verteilt sind. Wirkt ein Magnetfeld auf die Flüssigkeit, so werden die Partikel polarisiert und bilden Ketten in Richtung der Feldlinien. Durch die Ausrichtung der Partikel wird die Suspension mit steigender Feldstärke dickflüssiger. Somit kann eine magnetorheologische Flüssigkeit (MRF) in einem Magnetfeld drastisch, schnell und reversibel verändert werden. Um negative Eigenschaften wie Abrasion, Sedimentation und Alterung zu vermeiden, sind die Flüssigkeiten mit Additiven stabilisiert.

Die erste und zweite Blockiervorrichtung 22,122 dienen auch als Energieabsorptionsvorrichtung. Da die Blockiervorrichtung 22,122 bzw. das Wälzlager 23 eine Grundreibung mit einem einstellbarem Grunddrehmoment besitzt, ist eine Hemmung der Lenksäule bereits integriert. Im Crashfall kann die Blockiervorrichtung 22, 122 als reines geregeltes System verwendet werden. Dabei wird der Elektromagnet 26 so bestromt, dass die Spindelmutter 13,113 mit einem gewissen Bremsmoment verdrehbar ist, so dass die Bauteile der Lenksäule gegeneinander verlagerbar sind und dabei Energie absorbiert wird. Je nach angelegter Spannung können unterschiedliche Kräfte realisiert werden.

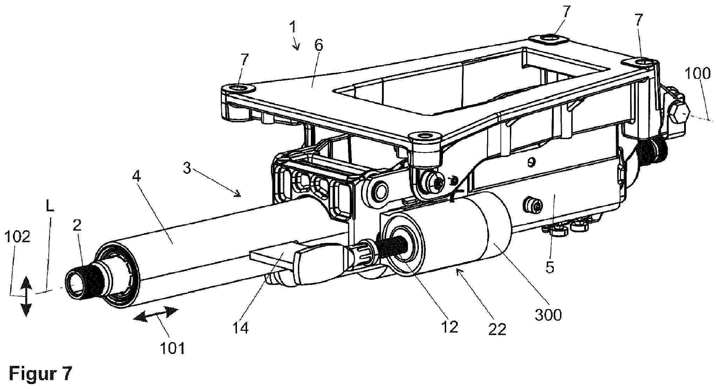

Figur 7 zeigt eine räumliche Darstellung einer Lenksäule in einer zweiten Ausführungsform mit einer ersten Blockiervorrichtung 22 für die Längsverstellrichtung und einer Blockiervorrichtung 122 für die Höhenverstellrichtung und motorischen Verstellantrieben für die Längsverstellung und einen motorischen Verstellantrieb für die Höhenverstellung. Der motorische Verstellantrieb ermöglicht es, das Mantelrohr 4 gegenüber dem Halteteil 6 mittels eines Elektromotors 300 zu verstellen, wenn sich die Blockiervorrichtung 22 in der Freigabestellung befindet. Vorteil der Erfindung ist es, dass sowohl die Blockiervorrichtung als auch die Energieabsorptionsvorrichtung kompakt und bauraumsparend als eine Einheit ausgebildet sind.

Die vorliegende Lenksäule mit einer oder zwei Blockiervorrichtung(en) kann in elektromechanischen Kraftfahrzeugservolenkungen, aber auch in Steer-by-Wire Lenksystemen eines Kraftfahrzeuges zum Einsatz kommen.

## Patentansprüche

1. Lenksäule (1) für ein Kraftfahrzeug, umfassend eine von einem Mantelrohr (4) umgebene Lenkspindel (2), die mit einem Lenkrad verbunden ist, und eine Führungsklammer (5), in der das Mantelrohr (4) entlang der Längsachse der Lenkspindel (2) verschiebbar geführt ist, wobei die Führungsklammer (5) um eine Schwenkachse (100) in einem Halteteil (6), das mit einem Chassis des Kraftfahrzeuges verbindbar ist, schwenkbar gelagert ist, und wobei die Position des Mantelrohrs (4) gegenüber dem Halteteil (6) verstellbar ist, wobei eine Blockiervorrichtung (22, 122) zwischen dem Mantelrohr (4) und dem Halteteil (6) angeordnet ist, wobei die Blockiervorrichtung (22, 122) eine Gewindestange (12, 112) aufweist, die mit einer Spindelmutter (13,113) in Eingriff steht, und wobei die Spindelmutter (13,113) in einem Wälzlager (23) gelagert ist, **dadurch gekennzeichnet, dass** die Wälzkörper (24) des Wälzlagers (23) zumindest teilweise von einer magnetorheologischen Flüssigkeit (25) umgeben sind und die Blockier-vorrichtung (22, 122) einen Elektromagneten (26) umfasst.

2. Lenksäule nach Anspruch 1, **dadurch gekennzeichnet, dass** die Spindelmutter (13,113) drehbar und ortsfest bezüglich der Führungsklammer (6) in einem Getriebegehäuse (21) gelagert ist, so dass eine Axialbewegung der Gewindestange (12,112) relativ zur Spindelmutter (13,113) zu einer Drehung der Spindelmutter (13,113) führt.

3. Lenksäule nach Anspruch 1 oder 2, **dadurch gekennzeichnet, dass** die Gewindestange (12,112) ohne Selbsthemmung verfahrbar ist.

4. Lenksäule nach einem der vorhergehenden Ansprüche, **dadurch gekennzeichnet, dass** zwei Blockiervorrichtungen (22, 122) vorgesehen sind, wobei die Lenksäule (1) in ihrer Länge durch einen ersten Blockiervorrichtung (22) und in ihrer Höhe durch einen zweiten Blockiervorrichtung (122) fixierbar ist.

5. Lenksäule nach einem der vorhergehenden Ansprüche, **dadurch gekennzeichnet, dass** die Wälzkörper (24) aus einem magnetisierbaren Werkstoff beschaffen sind, wobei der Elektromagnet (26) dazu eingerichtet ist, die Wälzkörper (24) zu magnetisieren oder zu entmagnetisieren.

6. Verfahren zur Steuerung einer verstellbaren Lenksäule (1) eines Kraftfahrzeuges umfassend eine von einem Mantelrohr (4) umgebene Lenkspindel (2), die mit einem Lenkrad verbunden ist, eine Führungsklammer (5), in der das Mantelrohr (4) entlang der Längsachse der Lenkspindel (2) verschiebbar geführt ist, wobei die Führungsklammer (5) um eine Schwenkachse (100) in einem Halteteil (6), das mit einem Chassis des Kraftfahrzeuges verbindbar ist, schwenkbar gelagert ist, und wobei die Position des Mantelrohrs (4) gegenüber dem Halteteil (6) verstellbar ist, wobei eine Blockiervorrichtung (22, 122) zwischen dem Mantelrohr (4) und dem Halteteil (6) angeordnet ist, wobei die Blockiervorrichtung (22, 122) eine Gewindestange (12, 112) aufweist, die mit einer Spindelmutter (13,113) in Eingriff steht, und die Blockiervorrichtung (22,22') zwischen einer Fixierstellung und Freigabestellung umgeschaltet werden kann, wobei in der Fixierstellung die Verstellung der Lenksäule (1) blockiert ist und in der Freigabestellung die Verstellung der Lenksäule (1) freigegeben ist, **dadurch gekennzeichnet, dass** das Verfahren folgende Schritte umfasst:
• Bereitstellen eines Wälzlagers (23), das die Spindelmutter (13,113) lagert, wobei die Wälzkörper (24) des Wälzlagers (23) zumindest teilweise von einer magnetorheologische Flüssigkeit (25) umgeben sind,
• Beim Übergang der Blockiervorrichtung (22, 122) in die Fixierstellung, Magnetisieren der Wälzkörper (24) mittels eines Elektromagnets (26) um die Viskosität der magnetorheologische Flüssigkeit (25) zu erhöhen, derart, dass die Rotation der Spindelmutter (13, 113) gesperrt ist,
• Beim Übergang der Blockiervorrichtung (22, 122) in die Freigabestellung, Entmagnetisieren der Wälzkörper (24) mittels des Elektromagnets (26) um die Viskosität der magnetorheologische Flüssigkeit (25) zu verringern, derart, dass die Rotation der Spindelmutter (13, 113) freigegeben ist.

7. Verfahren nach Anspruch 6, **dadurch gekennzeichnet, dass** die Spindelmutter (13, 113) drehbar und ortsfest bezüglich der Führungsklammer (6) in einem Getriebegehäuse (21) gelagert ist, so dass eine Axialbewegung der Gewindestange (12, 112) relativ zur Spindelmutter (13, 113) zu einer Drehung der Spindelmutter (13, 113) führt.

8. Verfahren nach Anspruch 6 oder 7, **dadurch gekennzeichnet, dass** die Gewindestange (12, 112) ohne Selbsthemmung verfahrbar ist.

9. Verfahren nach einem der Ansprüche 6 bis 8, **dadurch gekennzeichnet, dass** zwei Blockiervorrichtungen (22, 122) vorgesehen sind, wobei die Lenksäule (1) in ihrer Länge durch eine erste Blockiervorrichtung (22) und in ihrer Höhe durch eine zweite Blockiervorrichtung (122) fixierbar ist.

10. Verfahren nach einem der Ansprüche 6 bis 9, **dadurch gekennzeichnet, dass** im Crashfall der Elektromagnet (26) so bestromt wird, dass die Spindelmutter (13,113) mit einem vordefinierten Bremsmoment verdrehbar ist.

## Claims

1. A steering column (1) for a motor vehicle, comprising a steering spindle (2) which is surrounded by a casing tube (4) and is connected to a steering wheel, and a guide clamp (5) in which the casing tube (4) is guided displaceably along the longitudinal axis of the steering spindle (2), wherein the guide clamp (5) is mounted pivotably about a pivot axis (100) in a holding part (6) which is connectable to a chassis of the motor vehicle, and wherein the position of the casing tube (4) is adjustable in relation to the holding part (6), wherein a blocking device (22, 122) is arranged between the casing tube (4) and the holding part (6), wherein the blocking device (22, 122) comprises a threaded rod (12, 112) which is in engagement with a spindle nut (13, 113), and wherein the spindle nut (13, 113) is mounted in a rolling bearing (23), **characterized in that** the rolling bodies (24) of the rolling bearing (23) are at least partially surrounded by a magnetorheological fluid (25), and the blocking device (22, 122) comprises an electromagnet (26).

2. The steering column as claimed in claim 1, **characterized in that** the spindle nut (13, 113) is mounted in a transmission housing (21) so as to be rotatable and positionally fixed with respect to the guide clamp (6), and therefore an axial movement of the threaded rod (12, 112) relative to the spindle nut (13, 113) leads to a rotation of the spindle nut (13, 113).

3. The steering column as claimed in claim 1 or 2, **characterized in that** the threaded rod (12, 112) is movable without self-locking.

4. The steering column as claimed in one of the preceding claims, **characterized in that** two blocking devices (22, 122) are provided, wherein the length of the steering column (1) can be fixed by a first blocking device (22) and the height by a second blocking device (122).

5. The steering column as claimed in one of the preceding claims, **characterized in that** the rolling bodies (24) are produced from a magnetizable material, wherein the electromagnet (26) is configured to magnetize or to demagnetize the rolling bodies (24).

6. A method for controlling an adjustable steering column (1) of a motor vehicle, comprising a steering spindle (2) which is surrounded by a casing tube (4) and is connected to a steering wheel, and a guide clamp (5) in which the casing tube (4) is guided displaceably along the longitudinal axis of the steering spindle (2), wherein the guide clamp (5) is mounted pivotably about a pivot axis (100) in a holding part (6) which is connectable to a chassis of the motor vehicle, and wherein the position of the casing tube (4) is adjustable in relation to the holding part (6), wherein a blocking device (22, 122) is arranged between the casing tube (4) and the holding part (6), wherein the blocking device (22, 122) comprises a threaded rod (12, 112) which is in engagement with a spindle nut (13, 113), and the blocking device (22, 22') can be switched over between a fixing position and a release position, wherein, in the fixing position, the adjustment of the steering column (1) is blocked and, in the release position, the adjustment of the steering column (1) is released, **characterized in that** the method comprises the following steps:
• providing a rolling bearing (23) which supports the spindle nut (13, 113), wherein the rolling bodies (24) of the rolling bearing (23) are at least partially surrounded by a magnetorheological fluid (25),
• during the transfer of the blocking device (22, 122) into the fixing position, magnetizing the rolling bodies (24) by means of an electromagnet (26) in order to increase the viscosity of the magnetorheological fluid (25) in such a manner that the rotation of the spindle nut (13, 113) is blocked,
• during the transfer of the blocking device (22, 122) into the release position, demagnetizing the rolling bodies (24) by means of the electromagnet (26) in order to reduce the viscosity of the magnetorheological fluid (25) in such a manner that the rotation of the spindle nut (13, 113) is released.

7. The method as claimed in claim 6, **characterized in that** the spindle nut (13, 113) is mounted in a transmission housing (21) so as to be rotatable and positionally fixed with respect to the guide clamp (6), and therefore an axial movement of the threaded rod (12, 112) relative to the spindle nut (13, 113) leads to a rotation of the spindle nut (13, 113).

8. The method as claimed in claim 6 or 7, **characterized in that** the threaded rod (12, 112) is movable without self-locking.

9. The method as claimed in one of claims 6 to 8, **characterized in that** two blocking devices (22, 122) are provided, wherein the length of the steering column (1) can be fixed by a first blocking device (22) and the height by a second blocking device (122).

10. The method as claimed in one of claims 6 to 9, **characterized in that**, in the event of a crash, the electromagnet (26) is energized in such a manner that the spindle nut (13, 113) is rotatable with a predefined braking moment.

## Revendications

1. Colonne de direction (1) pour un véhicule automobile, comportant un arbre de direction (2) entouré par un tube d'enveloppe (4), lequel arbre de direction est relié à un volant de direction, et un étrier de guidage (5) dans lequel le tube d'enveloppe (4) est guidé de manière coulissante le long de l'axe longitudinal de l'arbre de direction (2), l'étrier de guidage (5) étant monté de manière pivotante autour d'un axe de pivotement (100) dans une partie de retenue (6) qui peut être reliée à un châssis du véhicule automobile, et la position du tube d'enveloppe (4) par rapport à la partie de retenue (6) étant réglable, un dispositif de blocage (22, 122) étant disposé entre le tube d'enveloppe (4) et la partie de retenue (6), le dispositif de blocage (22, 122) comprenant une tige filetée (12, 112) qui est en prise avec un écrou de broche (13, 113), et l'écrou de broche (13, 113) étant monté dans un palier à roulement (23), **caractérisée en ce que** les corps de roulement (24) du palier à roulement (23) sont entourés au moins partiellement par un fluide magnétorhéologique (25) et le dispositif de blocage (22, 122) comporte un électroaimant (26).

2. Colonne de direction selon la revendication 1, **caractérisée en ce que** l'écrou de broche (13, 113) est monté de manière rotative et fixe par rapport à l'étrier de guidage (6) dans un carter de transmission (21), de telle sorte qu'un mouvement axial de la tige filetée (12, 112) par rapport à l'écrou de broche (13, 113) mène à une rotation de l'écrou de broche (13, 113).

3. Colonne de direction selon la revendication 1 ou 2, **caractérisée en ce que** la tige filetée (12, 112) est déplaçable sans verrouillage automatique.

4. Colonne de direction selon l'une des revendications précédentes, **caractérisée en ce que** deux dispositifs de blocage (22, 122) sont prévus, la longueur de la colonne de direction (1) pouvant être fixée par un premier dispositif de blocage (22) et sa hauteur pouvant être fixée par un deuxième dispositif de blocage (122).

5. Colonne de direction selon l'une des revendications précédentes, **caractérisée en ce que** les corps de roulement (24) sont obtenus à partir d'une matière magnétisable, l'électroaimant (26) étant conçu pour magnétiser ou démagnétiser les corps de roulement (24).

6. Procédé de commande d'une colonne de direction (1) réglable d'un véhicule automobile comportant un arbre de direction (2) entouré par un tube d'enveloppe (4), lequel arbre de direction est relié à un volant de direction, un étrier de guidage (5) dans lequel le tube d'enveloppe (4) est guidé de manière coulissante le long de l'axe longitudinal de l'arbre de direction (2), l'étrier de guidage (5) étant monté de manière pivotante autour d'un axe de pivotement (100) dans une partie de retenue (6) qui peut être reliée à un châssis du véhicule automobile, et la position du tube d'enveloppe (4) par rapport à la partie de retenue (6) étant réglable, un dispositif de blocage (22, 122) étant disposé entre le tube d'enveloppe (4) et la partie de retenue (6), le dispositif de blocage (22, 122) comprenant une tige filetée (12, 112) qui est en prise avec un écrou de broche (13, 113), et le dispositif de blocage (22, 22') pouvant être commuté entre une position de fixation et une position de libération, le réglage de la colonne de direction (1) étant bloqué dans la position de fixation et le réglage de la colonne de direction (1) étant libéré dans la position de libération, **caractérisé en ce que** le procédé comporte les étapes suivantes :
• fourniture d'un palier à roulement (23) qui supporte l'écrou de broche (13, 113), les corps de roulement (24) du palier à roulement (23) étant entourés au moins partiellement par un fluide magnétorhéologique (25),
• lors du passage du dispositif de blocage (22, 122) à la position de fixation, magnétisation des corps de roulement (24) au moyen d'un électroaimant (26) afin d'augmenter la viscosité du fluide magnétorhéologique (25), de telle sorte que la rotation de l'écrou de broche (13, 113) soit bloquée,
• lors du passage du dispositif de blocage (22, 122) à la position de libération, démagnétisation des corps de roulement (24) au moyen de l'électroaimant (26) afin de réduire la viscosité du fluide magnétorhéologique (25), de telle sorte que la rotation de l'écrou de broche (13, 113) soit libérée.

7. Procédé selon la revendication 6, **caractérisé en ce que** l'écrou de broche (13, 113) est monté de manière rotative et fixe par rapport à l'étrier de guidage (6) dans un carter de transmission (21), de telle sorte qu'un mouvement axial de la tige filetée (12, 112) par rapport à l'écrou de broche (13, 113) mène à une rotation de l'écrou de broche (13, 113).

8. Procédé selon la revendication 6 ou 7, **caractérisé en ce que** la tige filetée (12, 112) est déplaçable sans verrouillage automatique.

9. Procédé selon l'une des revendications 6 à 8, **caractérisé en ce que** deux dispositifs de blocage (22, 122) sont prévus, la longueur de la colonne de direction (1) pouvant être fixée par un premier dispositif de blocage (22) et sa hauteur pouvant être fixée par un deuxième dispositif de blocage (122).

10. Procédé selon l'une des revendications 6 à 9, **caractérisé en ce qu'**en cas de collision, l'électroaimant (26) est alimenté en courant électrique de telle sorte que l'écrou de broche (13, 113) puisse tourner avec un couple de freinage prédéfini.
